# FASCICULE DE BREVET EUROPEEN

(11) **EP 0 498 748 B1**
(45) Date de publication et mention de la délivrance du brevet: **27.04.1994**
(21) Numéro de dépôt: 92440015.3
(22) Date de dépôt: 07.02.1992
(51) Int. Cl.: F24H 1/32, F24H 8/00, F24H 9/18, F23D 14/36, F23D 14/30

(54) **Chaudière sectionnable à gaz en fonte à prémélange total**
Gasbeheizter gusseisener Gliederheizkessel mit totaler Vormischung
Cast iron gas-fixed sectional boiler with total premixing

(30) Priorité: 07.02.1991 FR 9101572; 07.02.1991 FR 9101573; 14.03.1991 FR 9103290
(43) Date de publication de la demande: 12.08.1992
(73) Titulaire: DE DIETRICH THERMIQUE, F-67110 Niederbronn-les-Bains (FR)
(72) Inventeur: Fuhlhaber, Michel, F-67110 Reichshoffen (FR); Weitz, Philippe, F-67110 Reichshoffen (FR); Paradis, Marcel, F-67580 Mertzwiller (FR)
(74) Mandataire: Metz, Paul

(56) Documents cités:
- EP-A- 0 250 668
- EP-A- 0 271 434
- DE-U- 8 634 371
- FR-A- 1 588 190
- GB-A- 2 105 017

## Description

La présente invention se rapporte à une chaudière à gaz entièrement en fonte à chambre de combustion et brûleur situés en partie haute du corps de chauffe. Elle présente par ailleurs un bac de récupération des condensats intégré au corps de chauffe en partie basse de la chaudière et combiné à la buse d'évacuation des produits de combustion.

En particulier, mais non limitativement, la chaudière selon l'invention comporte un brûleur à gaz dans lequel le mélange gaz-air de combustion s'effectue totalement dans une chambre de prémélange avant d'alimenter une rampe à gaz.

Ce brûleur est disposé en partie haute au-dessus du corps de chauffe qu'il couvre presque entièrement.

A titre d'exemple de l'état de la technique, on peut citer les chaudières en acier à condensation et à gaz.

Elles comportent généralement un corps de chauffe en acier à double circulation de fluide caloporteur et de gaz chauds, dans le même sens, du bas vers le haut. La chambre de combustion est située en dessous du corps de chauffe et isolée de l'air atmosphérique. Un brûleur du type à prémélange air-gaz délivre une série de flammes sous la forme d'une rampe à gaz.

L'air nécessaire à la combustion est aspiré de l'extérieur de la chaudière par un ventilateur, dans lequel est admis simultanément le gaz en vue de préparer le mélange inflammable. Ce mélange est délivré dans un compartiment intermédiaire situé immédiatement en-dessous de la rampe de diffusion de la flamme. La teneur de ce mélange est régulée par le ventilateur.

On connaît ainsi l'invention décrite dans le brevet européen EP-A-0 255 472 VAILLANT se rapportant à un brûleur à gaz à prémélange simple.

Dans ce brûleur, le gaz est introduit à contre-courant devant une grille de répartition dans un canal aéraulique véhiculant un courant d'air généré par un ventilateur à partir d'une entrée d'aspiration d'air.

Grâce à la présence de la grille et à l'effet de contre-courant, le mélange air-gaz s'effectue grossièrement à ce niveau et se trouve théoriquement prêt à la combustion dès la sortie de ce canal.

Pour des raisons de meilleure efficacité, le mélange est introduit dans une conduite coudée et vient remplir une chambre de détente dont la paroi frontale forme la surface de diffusion de la flamme.

Il n'existe pas dans ce brûleur de chambre de prémélange total dans laquelle le mélange est déjà bien stabilisé et peut être envoyé après répartition sur la surface de diffusion des flammes.

Ce brûleur nécessite de par sa conception de nombreuses pièces en tôle qu'il faut fixer les unes aux autres, apportant des contraintes de fabrication peu compatibles avec les nécessités actuelles de rapidité et de qualité de production industrielle.

Par ailleurs, ce type de brûleur, de forme essentiellement circulaire, est condamné à s'adapter sur des chaudières spéciales, dont le corps de chauffe présente une entrée circulaire permettant de recevoir la base du brûleur, c'est-à-dire la surface de diffusion des flammes.

On distingue dans ce brûleur une alimentation de la surface de flamme par une ouverture à obturation réglable qui apporte une variation dans les caractéristiques aérauliques du circuit.

Ainsi, la turbine travaille toujours à plein régime, et on règle le débit par modification de la perte de charge du circuit.

Ce type de fonctionnement n'apparaît pas naturel et impose à la turbine des conditions de fonctionnement difficiles qui influent sur sa durée de vie.

Le but principal de la présente invention est de proposer un modèle de chaudière en fonte du type sectionnable, c'est-à-dire comportant un corps de chauffe formé par des éléments échangeurs juxtaposés, fonctionnant selon le type de combustion précédemment décrit, et dont les performances calorifiques sont nettement améliorées par rapport aux chaudières existantes tout en optimisant les coûts de fabrication.

Un des buts visés par la présente invention consiste à réaliser une chaudière compacte, c'est-à-dire de dimensions notablement réduites par rapport aux performances, constituant à elle seule une unité intégrée de chauffage.

Un autre but consiste, grâce à ses éléments échangeurs de haut rendement, à obtenir, à puissance égale, des échangeurs de petite taille conformés de façon idéale pour recevoir les organes de la chaudière.

Un but spécifique concernant ces échangeurs se rapporte à l'avantage particulier de ceux-ci permettant de diminuer notablement la formation de boue et de tartre dans leur volume intérieur.

Un autre but spécifique concernant ces échangeurs se rapporte à l'impossibilité pour l'eau d'entrer en ébullition à proximité de la chambre de combustion, grâce à leur bord supérieur en rampe inclinée formant le fond de la chambre de combustion.

Un autre but général concerne leur haut degré d'intégration fonctionnelle. Ainsi, les condensats et les fumées sont collectées et évacués par la même pièce.

Un dernier but concerne la fabrication industrielle du brûleur et de la chaudière.

Le simple assemblage par superposition de pièces monobloc avec interposition de joints plats apporte une facilité et une rapidité d'assemblage du brûleur difficiles à surpasser.

Inversement, une grande simplicité de montage découle de cette constitution simple.

D'autres avantages intéressants sont indiqués ci-après :
. structures compactes et modulaires permettant une fabrication moins coûteuse des constituants et un assemblage simple, aisé et plus rapide ;
. intervention de faible durée pour son installation et son raccordement au réseau des radiateurs et à l'alimentation en gaz ;
. la surface de combustion entièrement monobloc permet son remplacement immédiat ;
. combustion excellente au coeur de la flamme par un mélange parfaitement homogène, équilibré et convenablement réparti sur toute la surface de combustion ;
. faible niveau d'émission de matières volatiles polluantes dans les produits de combustion ;
. en raison de ses pièces composantes de formes simples et à joints plats, une grande fiabilité est assurée ;
. rendement thermique global excellent par le réchauffement de l'air de combustion ;
. la totale sécurité de fonctionnement est garantie.

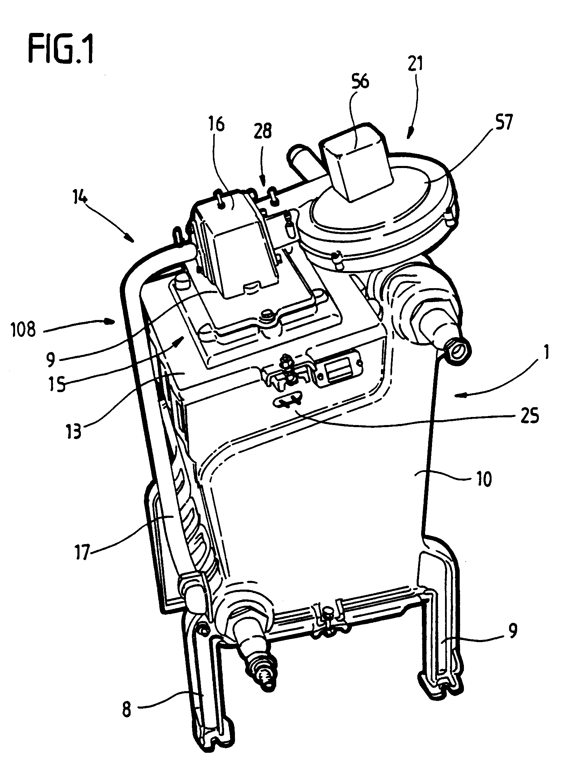

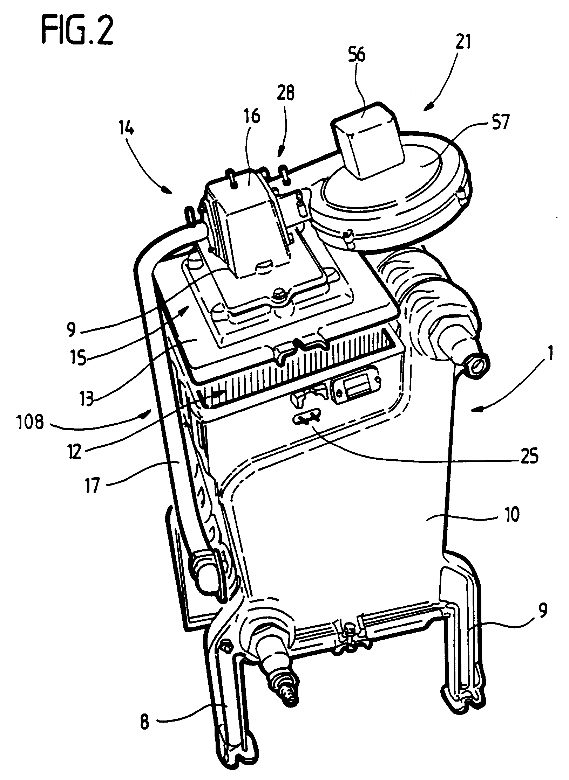

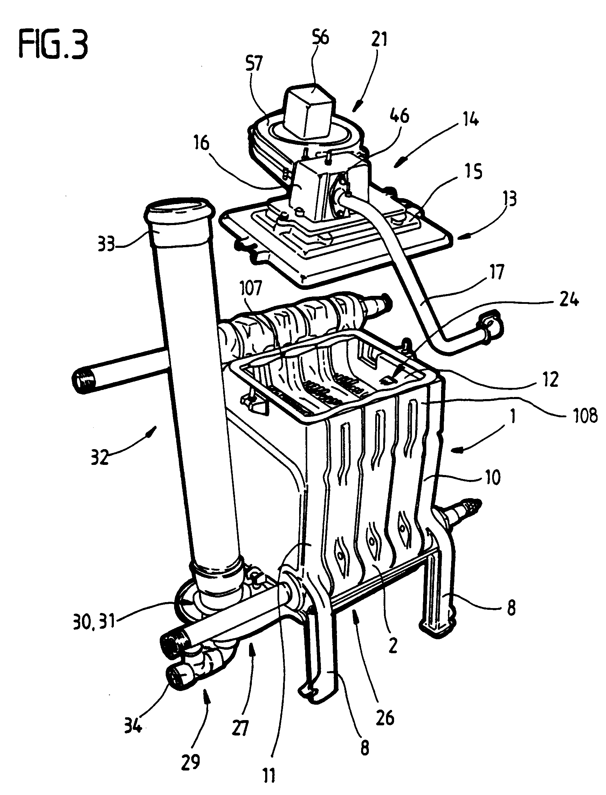

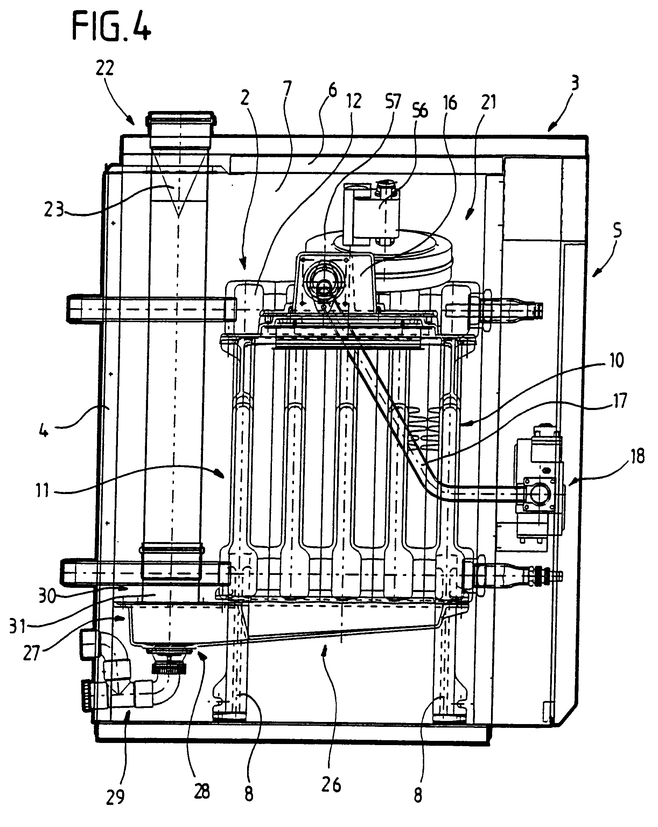

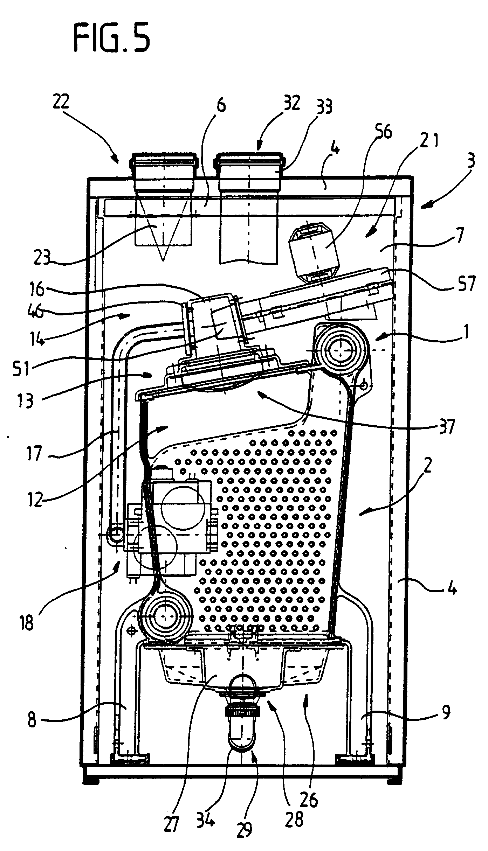

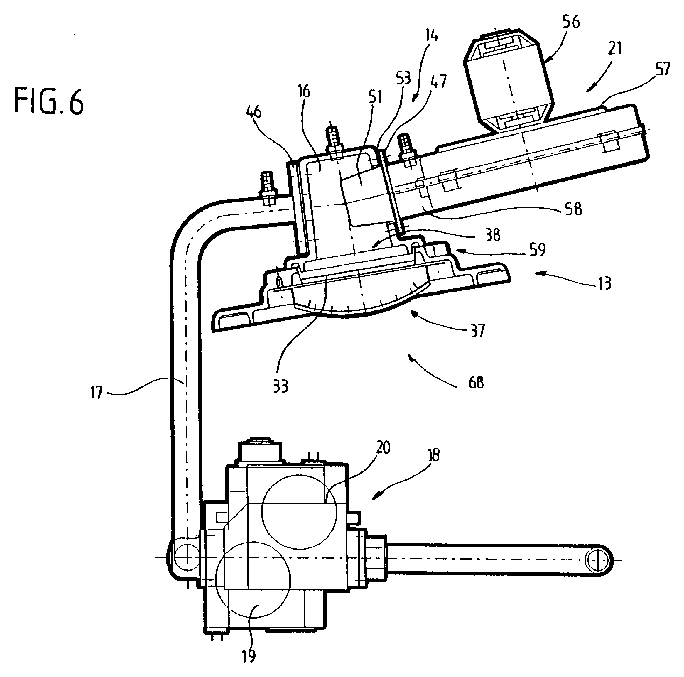

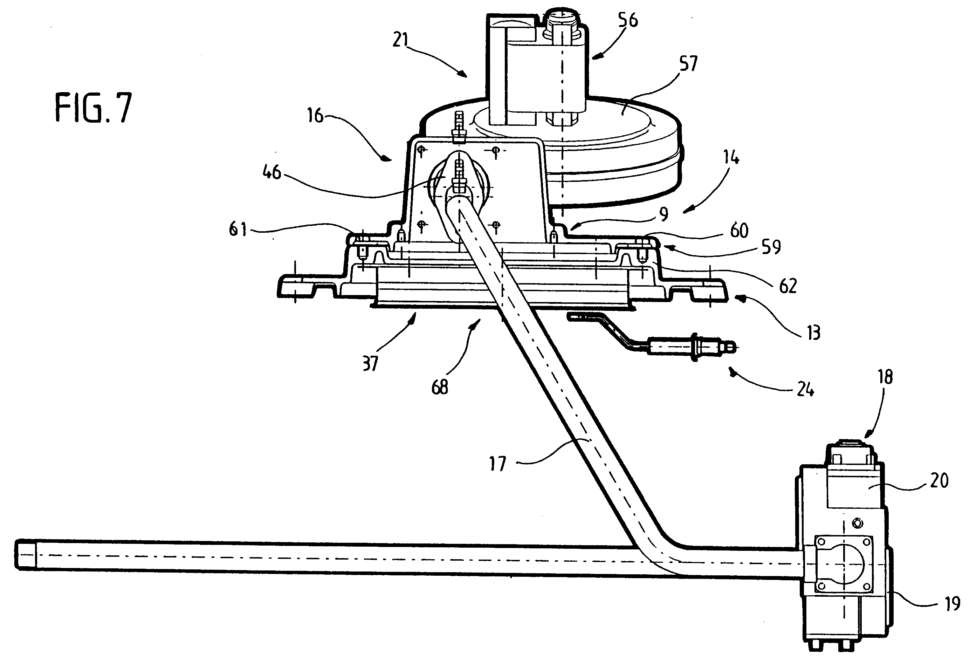

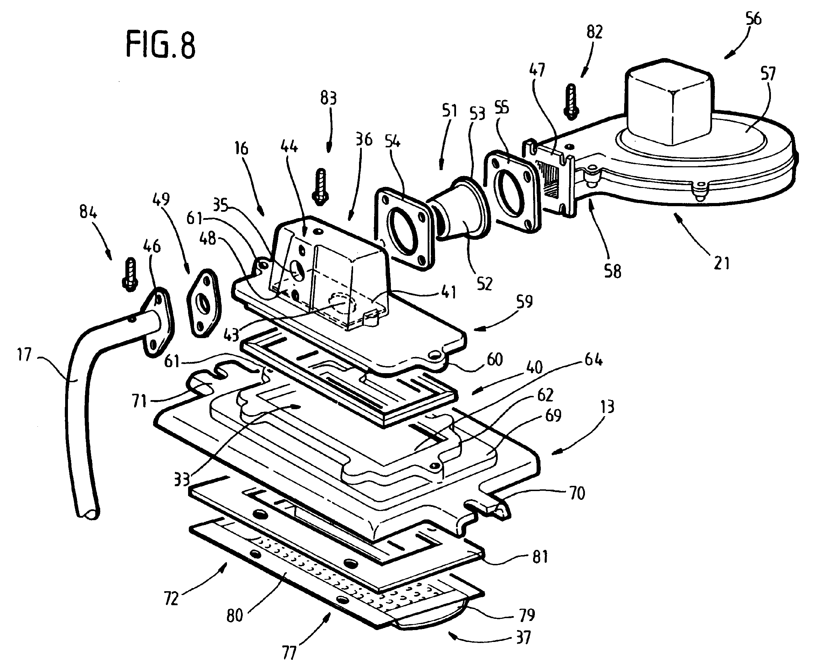

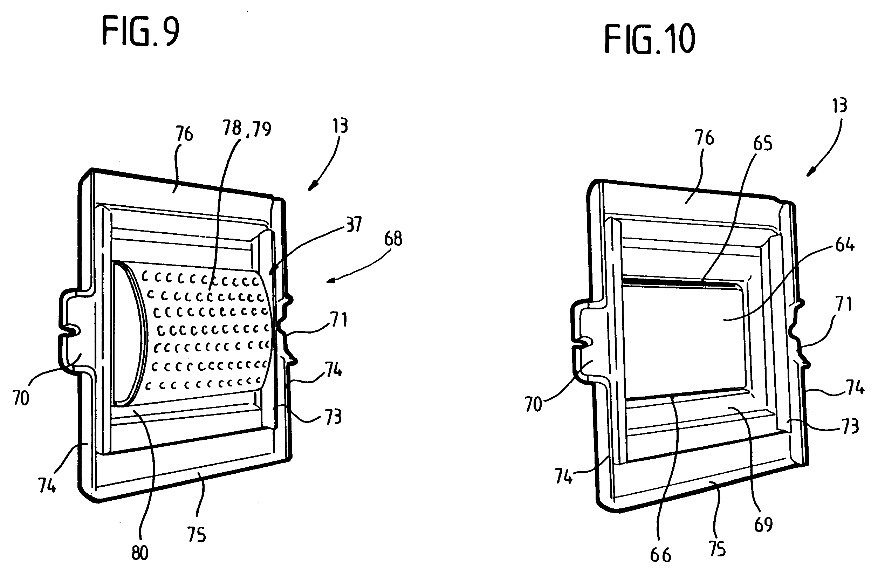

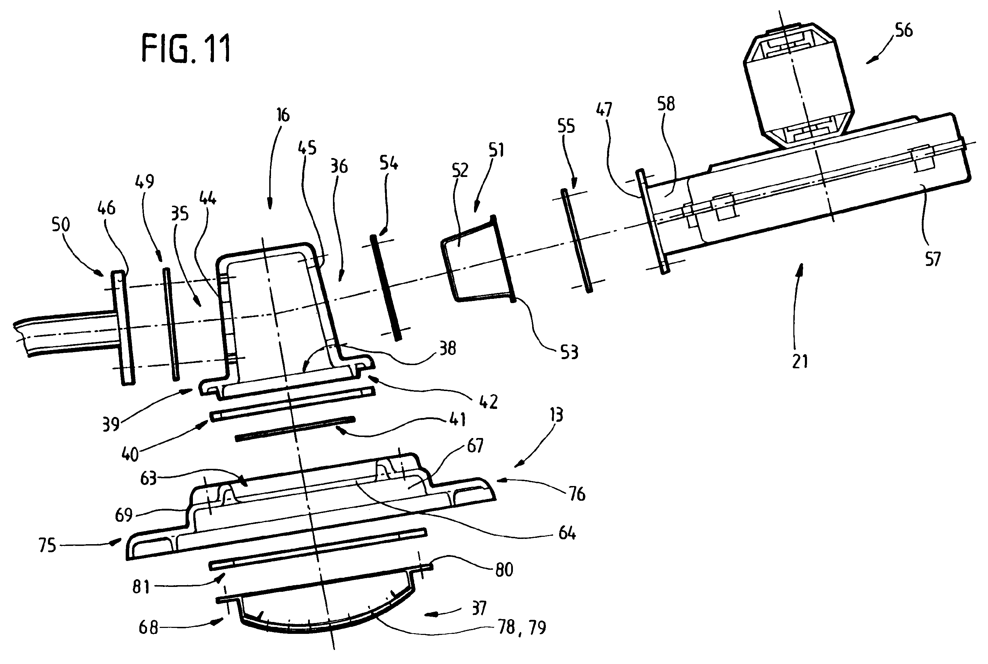

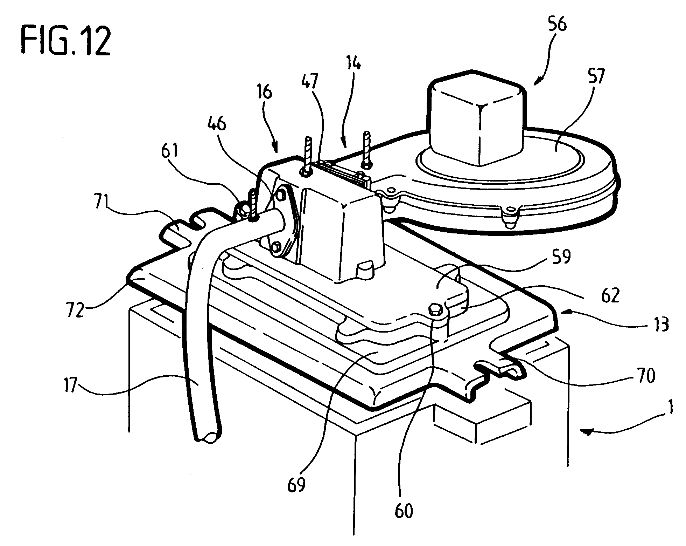

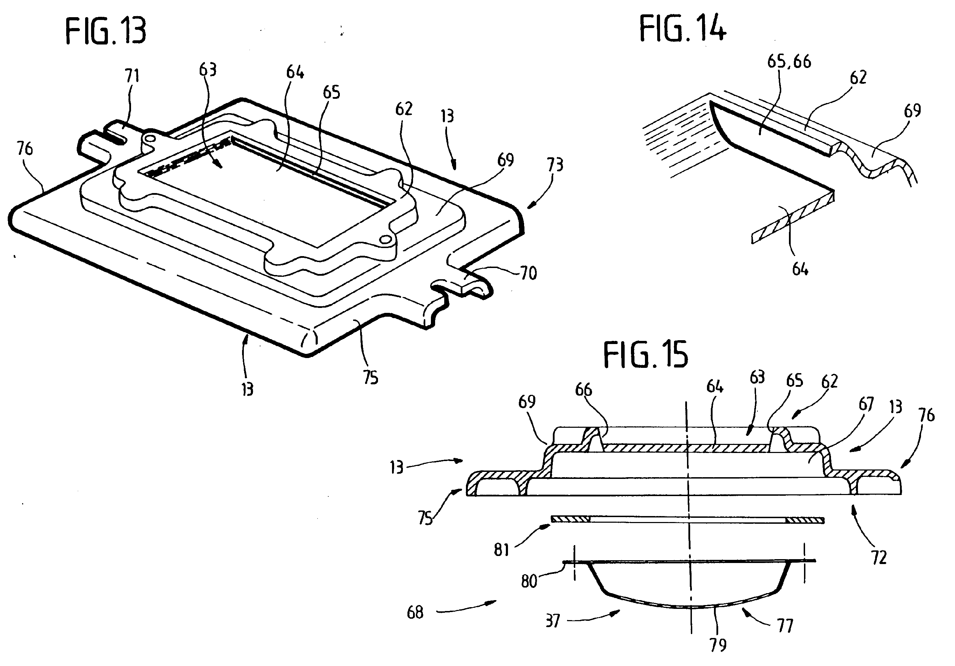

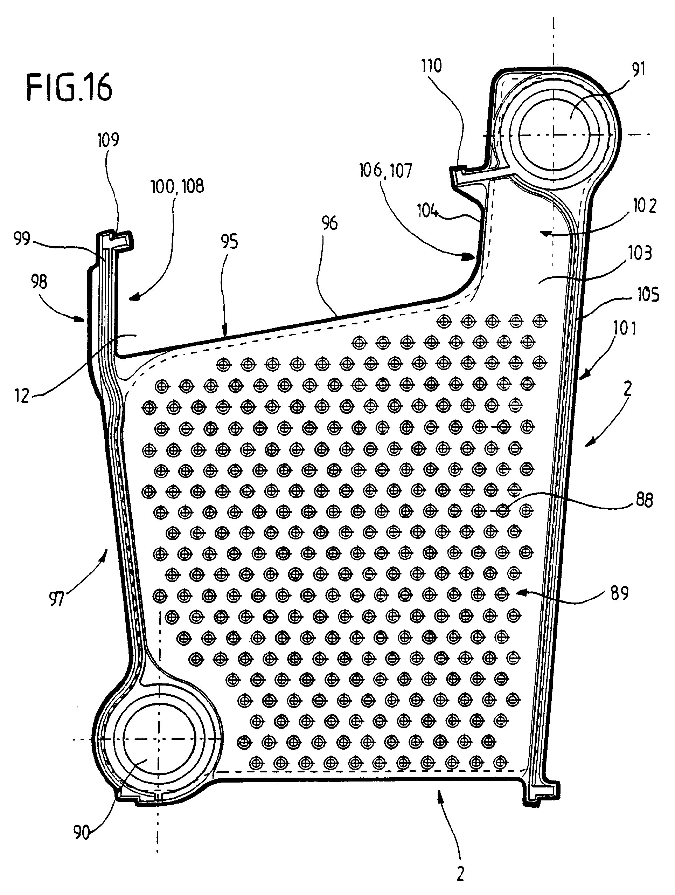

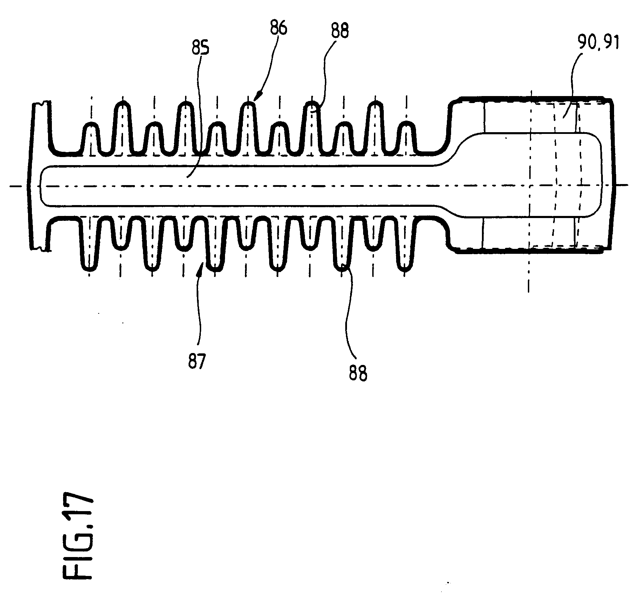

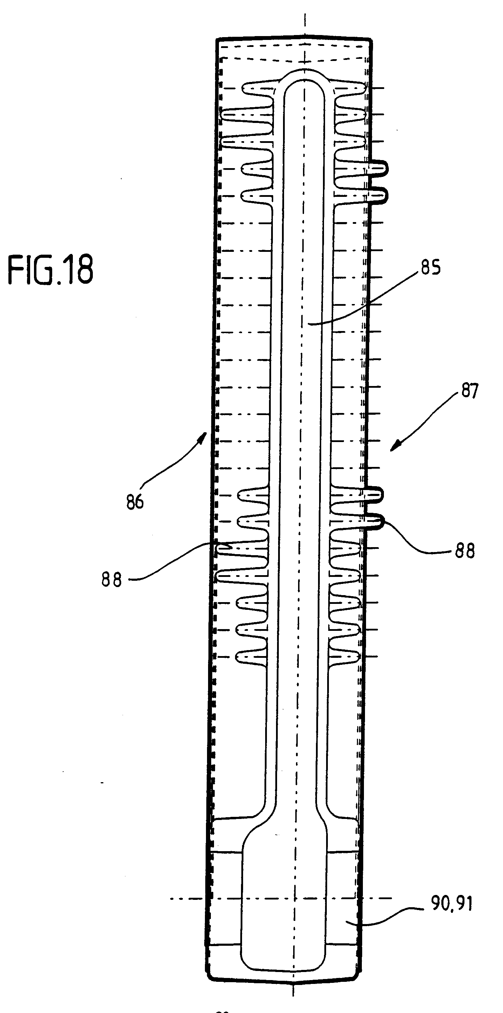

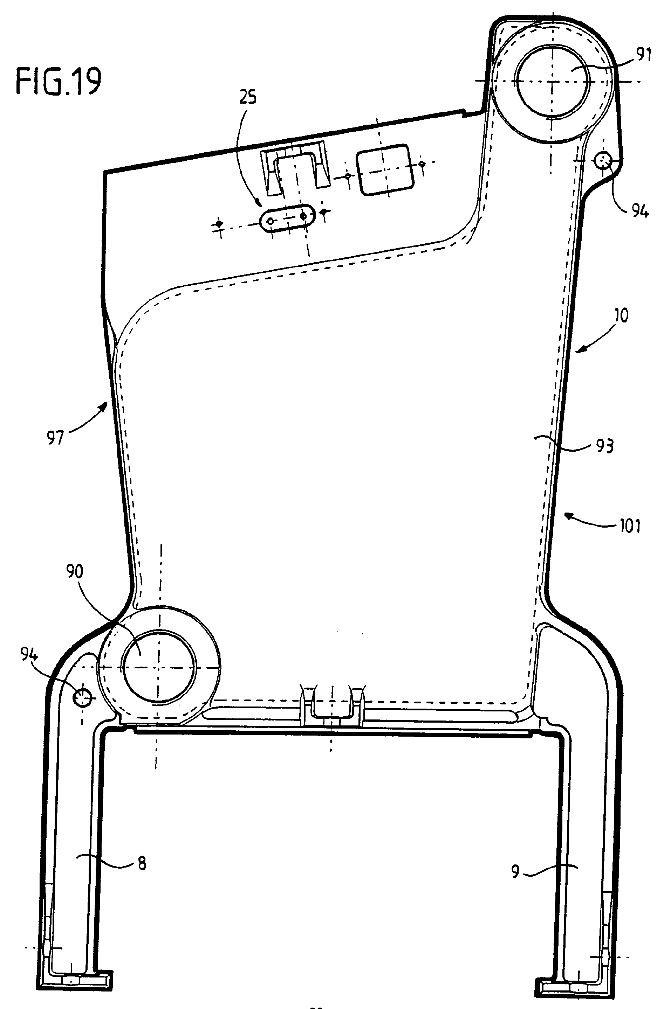

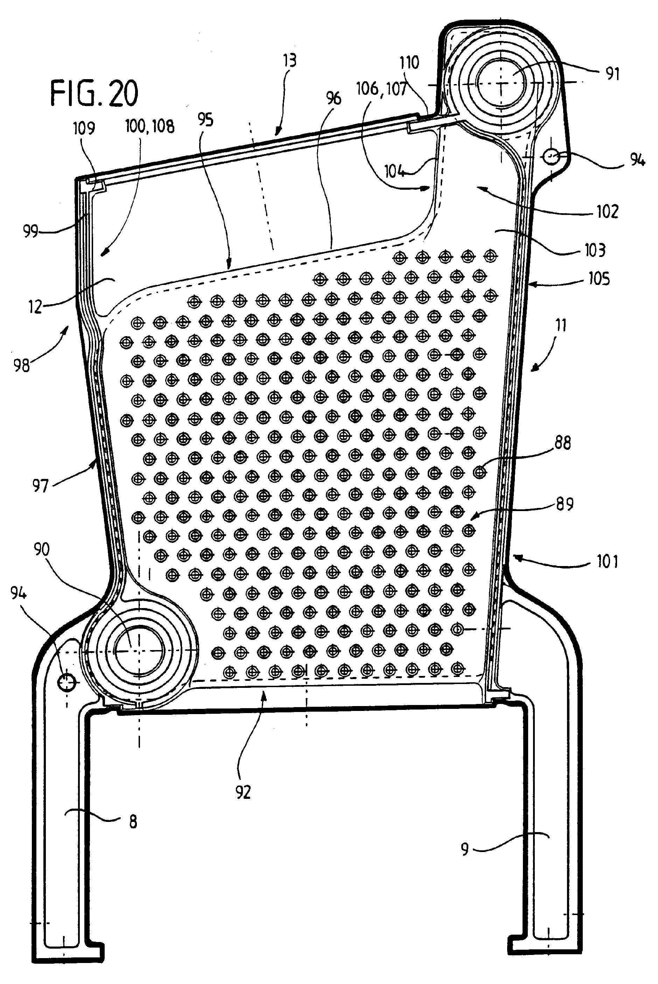

Les autres buts et les avantages de l'invention ressortiront de la description de détail ci-après en référence aux figures suivantes annexées :
. la figure 1 est une vue générale en perspective d'ensemble de la chaudière selon l'invention sans son habillage et montrant principalement sa face avant avec les sorties de connexions des électrodes d'allumage et son brûleur ;
. la figure 2 est une vue identique à la figure 1, montrant l'ensemble, brûleur et plaque-support de brûleur, soulevé ;
. la figure 3 est une vue d'ensemble en perspective de l'arrière, montrant le conduit d'évacuation des produits de combustion, ensemble, brûleur et plaque-support de brûleur, dissocié ;
. la figure 4 est une vue de profil de la chaudière à travers son habillage thermiquement isolant rendu transparent pour les besoins de la représentation ;
. la figure 5 est une vue en élévation de l'ensemble de la chaudière à travers son habillage isolant rendu également transparent ;
. la figure 6 est une vue d'ensemble, selon une direction générale transversale, du brûleur et du système d'alimentation en combustible ;
. la figure 7 est une vue d'ensemble, selon une direction longitudinale, du brûleur et du système d'alimentation en combustible ;
. la figure 8 est une vue en perspective dite en éclaté du brûleur équipant la chaudière selon l'invention ;
. la figure 9 est une vue en perspective de dessous du brûleur équipé de la surface de diffusion des flammes ;
. la figure 10 est une vue en perspective de dessous de la plaque-support de brûleur sans la surface de diffusion des flammes ;
. la figure 11 est la coupe longitudinale en éclaté du brûleur selon l'invention ;
. la figure 12 est une vue en perspective simplifiée du brûleur monté sur la chaudière ;
. la figure 13 est une vue en perspective de la partie supérieure de la plaque-support de brûleur ;
. la figure 14 est une vue agrandie d'une des fentes de passage du mélange sur la plaque-support de brûleur ;
. la figure 15 est une vue en coupe transversale de la plaque-support de brûleur correspondant à la figure 13.
. la figure 16 est une vue en élévation d'un élément échangeur intermédiaire de la chaudière selon l'invention ;
. la figure 17 est une vue en coupe transversale passant par une connexion d'eau de l'échangeur représenté ci-dessus ;
. la figure 18 est une coupe longitudinale passant par une connexion d'eau d'un élément intermédiaire ;
. la figure 19 est une vue en élévation de la face externe de l'élément d'extrémité de façade avant ;
. la figure 20 est une vue en élévation de la face interne de l'élément d'extrémité de façade arrière.

La chaudière selon l'invention est une chaudière en fonte du type sectionnable comportant les organes et éléments fonctionnels généraux suivants :
. un corps de chauffe composé d'un assemblage-juxtaposition d'éléments échangeurs de chaleur en fonte à l'intérieur desquels circule le fluide caloporteur et entre lesquels s'échappent les gaz chauds et produits de combustion le long de volumes appelés par extension également carneaux ;
. une chambre de combustion située en partie supérieure du corps de chauffe ;
. un brûleur à gaz du type à prémélange total associé à des blocs fonctionnels d'admission d'air et de gaz ;
. un bloc fonctionnel de récupération et évacuation des produits de condensation sur les parois des éléments échangeurs, appelés condensats ;
. un conduit d'évacuation des gaz de combustion en liaison avec la cheminée ;
. un ensemble d'allumage, généralement un montage à électrodes ;
. un habillage thermiquement isolant en tôle ;
. un compartiment intérieur étanche ;
. un dispositif électrique de régulation, de sécurité, et de commande.

Une première originalité de la chaudière réside dans l'utilisation d'éléments échangeurs à picots de conception nouvelle et originale favorisant les performances du corps de la chaudière : échange de chaleur, circulation des fluides, optimisation de fabrication.

Une autre originalité réside dans la conception du brûleur compact en fonte, brûleur de type à prémélange total, dont toutes les parties constitutives sont monobloc, réalisées en fonte moulée, et conformées de façon à permettre uniquement l'utilisation de joints plats d'étanchéité et à rendre le brûleur plus facilement démontable, tout en optimisant le rendement de la combustion.

Une autre caractéristique originale de l'invention est la présence d'un bac de récupération des condensats à double fonction : récupération par gravité des condensats ruisselant sur les parois des éléments échangeurs et collecte des produits de combustion vers le conduit d'évacuation des gaz, ce qui introduit dans le circuit de circulation des produits de combustion une surface supplémentaire importante de condensation avant leur entrée dans le conduit d'évacuation vers la cheminée.

L'habillage quant à lui a été conçu spécifiquement pour cette chaudière, de manière à la rendre compacte et à faciliter l'assemblage tout en conservant un accès facile au brûleur, au bac de récupération, et autres accessoires. L'habillage est également prévu pour porter des pièces de raccordement entre les entrées et sorties de fluides du corps de la chaudière et les conduits de l'installation afin de faciliter le raccordement de la chaudière à l'installation de chauffage, à la cheminée, à la conduite de gaz courant et à une évacuation d'eaux usées.

On se reportera tout d'abord aux figures 1 à 5 pour décrire la chaudière dans son ensemble, préalablement aux descriptions de détail de chaque partie constitutive.

La chaudière présente un corps de chauffe 1, en fonte, formé par des éléments échangeurs intermédiaires juxtaposables tels que 2 réalisés en fonte émaillée. Il est habillé par un caisson isolant 3 réalisé à l'aide de panneaux assemblés tels que 4 dont un panneau constitue la porte d'accès avant 5. Le panneau supérieur est amovible pour permettre un accès direct supplémentaire. Il débouche sur une trappe d'accès 6 à un volume intérieur 7 étanche à l'air, délimité par les panneaux intérieurs visibles sur la figure 4.

Comme on le verra plus loin, ce volume intérieur est utilisé pour réchauffer l'air de combustion avant son injection dans le brûleur.

Ce corps de chauffe repose sur quatre pieds tels que gauches 8 et droits 9, conformés dans des échangeurs d'extrémité avant 10 et arrière 11. Les échangeurs juxtaposés délimitent par leur partie supérieure une chambre de combustion 12 visible sur les figures 2 et 3 obturée par une plaque-support de brûleur 13 supportant un brûleur à prémélange total 14. Sur cette plaque est montée une interface mécanique monobloc 15 séparant une chambre de prémélange total 16 et la chambre de combustion 12.

Dans un premier temps on décrira les éléments de la chaudière en suivant le trajet du mélange inflammable et des produits de combustion.

Une conduite d'arrivée 17 de gaz amène le gaz depuis un bloc fonctionnel d'alimentation et de régulation 18 en gaz assurant simultanément la détente et la sécurité, formé d'un manodétendeur 19 et d'un bloc de régulation contenant une vanne de sécurité 20. Celui-ci est fixé sur l'avant de la chaudière pour permettre un accès facile par simple ouverture de la porte de l'habillage 5. Le bloc fonctionnel d'alimentation et de régulation 18 est raccordé à l'entrée de gaz de la chambre de prémélange total 16 du brûleur.

Il assure l'autorégulation de la pression de gaz à partir des pressions individuelles ou différentielles existant dans et aux entrées de la chambre de prémélange total 16.

Un groupe centrifuge aéraulique 21 assure l'alimentation en air de combustion. Il aspire l'air à l'extérieur. Il commande éventuellement et régule le débit nécessaire de l'entrée d'air dans la chambre de combustion 12. Cet ensemble sera décrit plus loin en détail avec la description du brûleur.

L'air est prélevé à l'extérieur à travers un conduit 22 d'admission, débouchant par son extrémité supérieure sur le couvercle de l'habillage et par son extrémité inférieure en partie inférieure du volume intérieur étanche 7. Ce conduit est équipé d'un filtre-réceptacle 23 conformé en cône, pointe dirigée vers le bas, pour filtrer l'air admis, retenir les insectes, poussières et autres matières solides en suspension, afin de protéger le brûleur (figures 4 et 5).

Le conduit d'admission 22 débouche dans la partie inférieure du volume étanche 7 et apporte l'air frais qui est repris par le ventilateur du groupe aéraulique 21 au niveau de son entrée. L'air frais remonte donc le long du corps de chauffe qui est à nu à l'intérieur de l'habillage. Il se réchauffe et réalise une isolation dynamique de la chaudière par la formation d'un matelas en mouvement.

L'air de combustion ainsi réchauffé participe à l'amélioration du rendement.

Le mélange air-gaz est préparé dans la chambre de prémélange 16 du brûleur dont la conception originale sera détaillée plus loin.

La combustion, déclenchée par des électrodes d'allumage 24 classiques ou à incandescence, est commandée à partir du tableau de commande. Celles-ci, visibles sur la face latérale avant de la chambre de combustion, se développent sous le brûleur, à la sortie de celui-ci dans la chambre de combustion. Elles sont reliées au tableau de commande par des connexions telles que 25. La chambre de combustion 12 occupe toute la longueur du corps de chauffe ainsi que la majorité de sa largeur. Cette chambre de combustion 12 est en communication directe avec les volumes traversés par les produits de combustion qui s'échappent de haut en bas entre tous les éléments échangeurs dont la conception originale sera détaillée plus loin. Les produits de combustion arrivent en bas du corps de chauffe 1 directement dans un bac de récupération 26 des condensats à face interne entièrement émaillée qui les regroupe et assure leur évacuation. Ce bac de récupération 26 recueille aussi par gravité les condensats qui ruissellent le long des parois des éléments échangeurs. Il recueille également tous les produits gazeux de la combustion dont une partie peut encore se condenser sur son fond et ses parois. Il forme ainsi une chambre de condensation.

Cette constitution confère à la chaudière selon l'invention les caractéristiques, avantages et performances d'une chaudière à condensation.

Le bac de récupération est réalisé, comme pratiquement toutes les pièces composantes, en fonte moulée, émaillée sur sa face interne, et sa périphérie est fixée de façon étanche avec interposition d'un joint plat sous la totalité du fond du corps de chauffe. Il affecte la forme générale d'une cuve à fond incliné pour favoriser l'écoulement des condensats se prolongeant, à l'arrière du corps de chauffe (voir figures 3 et 4) par un module de raccordement 27 dont le fond comporte une sortie circulaire 28 pour les produits liquides en communication avec une décharge ou l'égout par un siphon 29 et dont la partie supérieure présente une sortie circulaire 30 pour les produits gazeux 31.

La sortie 30 des produits gazeux du bac de récupération est raccordée à un conduit vertical d'évacuation 32 débouchant sur la face supérieure de l'habillage sur lequel il est fixé mécaniquement par l'intermédiaire d'une pièce de raccordement 33 sur laquelle viendra s'adapter le conduit de cheminée.

Cette conception nouvelle du circuit d'évacuation des produits de combustion s'avère simple, compacte et peu onéreuse et ne nécessite pas l'emploi de la buse traditionnelle de sortie montée sur ou conformée dans le corps de chauffe.

La sortie des produits liquides du bac de récupération est raccordée par le siphon 29 (figures 3, 4) à une évacuation 34 communiquant avec l'égout.

On décrit à présent en détail, en référence aux figures 6 à 13, le brûleur de conception nouvelle, équipant de préférence, mais non limitativement, le corps de chauffe de la chaudière selon l'invention.

Selon l'une de ses caractéristiques, toutes les pièces constitutives du brûleur 14 sont monobloc, réalisées en fonte moulée et conformées de façon à permettre l'utilisation de joints plats d'étanchéité entre toutes les différentes pièces constitutives et rendre le brûleur plus facilement démontable.

Le brûleur, selon le mode de réalisation non limitatif représenté sur les figures, se compose principalement des éléments suivants :
. la chambre monobloc de prémélange total 16 formant une enceinte de forme quasi cubique mais légèrement pyramidale qui présente deux orifices latéraux disposés en regard constituant une entrée de gaz 35 et une entrée d'air 36 ;
. un support de brûleur sous la forme de la plaque monobloc déjà indiquée ci-dessus comme plaque-support de brûleur 13, obturant la chambre de combustion 12 de la chaudière sur laquelle elle est montée et constituant l'interface mécanique monobloc 15 entre la chambre de prémélange total 16 et la chaudière. Cette plaque-support 13 s'adapte parfaitement sur la partie supérieure de la chaudière et constitue la plaque de fermeture de sa chambre de combustion 12 ;
. une surface de combustion 37 sur laquelle se forme et se développe le tapis de flammes ou nappe de combustion ;
. le groupe centrifuge aéraulique 21 à sortie latérale de soufflage pénétrant dans la chambre de prémélange total.

On décrira maintenant en détail chacun des éléments composant le brûleur selon l'invention.

La chambre monobloc de prémélange total 16 réalisée en fonte moulée présente une forme générale en tronc de pyramide à section transversale sensiblement en forme de "U" légèrement évasée vers une ouverture 38 inférieure tournée vers la chaudière. Cette ouverture, formée dans la face inférieure du corps de la chambre ou dans une plaque rapportée, constitue une sortie pour le mélange gazeux.

On prévoit, sur toute la périphérie de la face inférieure, un épaulement périmétrique 39 en saillie se terminant par une base à profil arrondi servant d'une part à la mise en place et à la fixation de la chambre de prémélange sur la plaque-support de brûleur décrite en détail ci-après, et d'autre part à recevoir un joint plat 40 conférant l'étanchéité nécessaire entre la chambre de prémélange total 16 et la plaque-support 13 de brûleur.

Selon la version préférée, l'obturation inférieure de la chambre est une plaque appelée diaphragme de sortie 41, qui vient s'appliquer contre la face fonctionnelle de l'épaulement périmétrique 39 et s'y trouve maintenu par une nervure périphérique en saillie 42 prévue perpendiculairement à la face fonctionnelle de cet épaulement de sortie. Ce diaphragme de sortie 41 comporte une ouverture décentrée 43 qui constitue l'orifice de sortie pour le mélange gazeux air-gaz (figure 8).

Le corps de la chambre de prémélange total 16 présente deux faces latérales opposées 44 et 45 comportant chacune au moins une zone plane au travers de laquelle sont obtenues les ouvertures correspondant aux entrées 35 et 36 du gaz et de l'air et sur lesquelles on pourra fixer des brides 46 ou raccords plans 47 avec interposition de joints plats.

Plus particulièrement, une des faces latérales 44, à gauche sur la figure 8, comporte une ouverture circulaire constituant l'orifice de l'entrée 35 de gaz et une face plane de fixation 48 entourant cette ouverture sur laquelle vient porter un joint d'étanchéité au gaz 49, et la bride annulaire telle que 46 permettant de raccorder la conduite 17 d'alimentation en gaz, l'ensemble étant maintenu par une pluralité d'éléments de fixation, boulons ou autres tels que 50.

La face latérale, située à droite sur la figure 11, comporte une ouverture circulaire constituant l'entrée d'air 36, apte à recevoir un injecteur d'air 51 en forme de buse cylindro-conique 52 à rebord périphérique de maintien 53, buse destinée à entrer complètement dans la chambre de prémélange, et dont le rebord périphérique de maintien 53 vient buter contre la zone plane de la face extérieure latérale de la chambre de prémélange 16 par l'intermédiaire d'un joint plat d'étanchéité 54 complété par un deuxième joint 55 et d'une pluralité de boulons de fixation.

Le fond du corps de la chambre de prémélange total est tourné vers le haut, ses faces obscures avant et arrière peuvent être planes ou bombées selon les facilités de fabrication.

On décrira ci-après le bloc centrifuge aéraulique 21. Il comporte un moteur 56 entraînant une turbine centrifuge 57 placée dans un corps profilé appelé volute à ouverture latérale de sortie 58 de l'air soufflé.

La sortie d'air soufflé présente des caractéristiques dimensionnelles et de forme appropriées à celles de l'entrée de l'injecteur et de l'entrée d'air dans la chambre de prémélange. De préférence, les mêmes boulons réalisent l'assemblage de la chambre de prémélange, de l'injecteur d'air, de la sortie d'air du bloc aéraulique 21 et on prévoit de disposer les deux joints plats d'étanchéité 54 et 55 de part et d'autre du rebord de maintien 53 de l'injecteur d'air 51 pour assurer le maintien et l'étanchéité de la liaison.

Par ailleurs on note que, les deux entrées se faisant face, leur plan vertical de symétrie est situé dans le plan de symétrie vertical transversal du corps de la chambre de prémélange ou plan de coupe de la figure 11.

L'ouverture décentrée constituant l'orifice de sortie 43 du mélange air-gaz prévu dans le diaphragme 41 est, comme indiqué précédemment, décalée par exemple vers l'avant par rapport à ce plan de symétrie dans le but d'assurer un mélange suffisant des deux composants gazeux et d'éviter le court-circuit entre l'une ou l'autre entrée et la sortie (figure 8).

La chambre de prémélange repose sur une base 59 pourvue de deux extrémités de fixation 60 et 61.

On décrira ci-après la plaque-support 13 de brûleur. Il s'agit d'une pièce monobloc en fonte en forme de plaque à trois niveaux fonctionnels tous venus bruts de fonderie. La forme et les dimensions de cette plaque-support sont telles qu'elle couvre entièrement la partie supérieure du corps de la chaudière et ferme en totalité la face supérieure de la chambre de combustion de la chaudière comme on peut le voir sur la figure 12.

En examinant la plaque-support 13 de brûleur sur les figures 8, 9, 10 et 13, on distingue un premier bossage 62 délimitant une gorge destinée à recevoir et à comprimer le joint plat d'étanchéité 40 de sortie de la chambre de prémélange total 16, entourant entièrement l'ouverture d'une chambre intermédiaire 63 de mélange à chicanes fermée sur sa face supérieure par le diaphragme de sortie 41 de la chambre de prémélange 16 et obturée par une face inférieure 64, monobloc avec le corps de la plaque-support 13. Le mélange gazeux s'échappe par deux fentes longitudinales 65 et 66 s'étendant entièrement sur chacune des faces latérales longitudinales de cette chambre intermédiaire 63 de mélange, formant ainsi deux chicanes en regard obligeant le gaz à se propager sur la périphérie en vue d'une meilleure répartition.

On distingue ensuite une chambre tampon ou chambre de répartition 67 fermée sur sa face supérieure par la face inférieure 64 de la chambre intermédiaire 63 de mélange à chicanes et sur sa face inférieure par le corps convexe d'un module de diffusion 68 qui sera décrit plus loin en détail.

Latéralement, cette chambre de répartition 67 est délimitée par un bossage périmétrique 69 venant également brut de fonderie de façon que la longueur et la largeur de cette chambre soient nettement supérieures à celles de la chambre intermédiaire à chicanes. On prévoit extérieurement au bossage 69 des oreilles de fixation 70 et 71 pour l'assemblage avec la plaque-support 13 avec interposition d'un joint plat d'étanchéité.

On distingue ensuite un volume de combustion 72, ouvert vers le bas et qui sera délimité par la partie supérieure de la chambre de combustion du corps de chauffe de la chaudière recevant le brûleur. Le volume de combustion est bordé longitudinalement, d'un côté par une nervure périphérique 73 en saillie vers le bas sur les figures, et de l'autre par un rebord périmétrique formé latéralement, de chaque côté, par deux rebords de fixation identiques 74 incurvés vers le bas, interrompus chacun en partie médiane par un décrochement d'appui pour un élément de fixation et par un rebord incurvé 75 et un rebord plat 76.

L'ensemble représentant la conformation périmétrique de sous-face de la plaque-support est monobloc avec elle. Cette conformation permet, avec un corps de chauffe adapté, d'assurer une jonction simple avec la chaudière avec étanchéité par joint plat.

Le module de diffusion 68 présente un corps 77 en saillie à face inférieure bombée convexe 78 équipée d'une grille 79 ou d'un matériau poreux perméable au gaz. Le corps du module de diffusion fait saillie dans le volume de combustion selon une disposition longitudinale, dont tout le bord supérieur se prolonge latéralement par un rebord périmétrique plan de fixation 80 venant s'appuyer sur la partie en regard de la plaque-support 13 de brûleur avec interposition d'un joint plat d'étanchéité 81.

La forme et la matière de la face bombée convexe, c'est-à-dire de l'intérieur vers l'extérieur, sont déterminées de façon que, d'une part, le mélange air-gaz brûle en formant une nappe de combustion homogène et que, d'autre part, le rayonnement soit dirigé radialement à partir de la surface de combustion vers tous les points du fond de la chambre de combustion sans laisser de points dits "froids" en périphérie et/ou dans les angles améliorant ainsi l'échange de chaleur avec les éléments du corps de l'échangeur de la chaudière.

La face intérieure de la surface de diffusion du module de diffusion 68 forme la face de fermeture de la chambre de répartition, la face extérieure constituant la surface de diffusion sur laquelle se forme le tapis de flammes ou nappe de combustion.

La longueur de la surface de diffusion est suffisamment importante pour occuper la majeure partie de la chambre de combustion tant en largeur qu'en longueur.

On peut envisager à titre de variante le module de diffusion suivant.

Il est formé d'un cadre-support plan contenant un ou plusieurs panneaux juxtaposés en céramique perforés d'une multitude de petits orifices.

Comme on peut le remarquer sur la figure 8, il existe des embouts de prise de pression à trois niveaux. Ainsi, on distingue un embout 82 de sortie de ventilateur, un embout 83 de chambre de combustion, un embout 84 d'arrivée de gaz.

Selon le mode de sécurité employé, on mesure à l'aide d'un montage avec capteurs appropriés la différence de pression existant entre le bloc aéraulique et la chambre de prémélange.

Sa valeur voisine de zéro ou nulle traduit une défaillance ou un mauvais fonctionnement du ventilateur.

On utilise ces prises de pression en vue de l'autorégulation de l'injection de gaz, par exemple par des moyens pneumatiques du type membrane air-gaz.

Par exemple, la différence de pression entre l'air à la sortie de la turbine et celle régnant dans la chambre de prémélange total 16 est utilisée pour commander un élément pneumatique de régulation de pression monté sur le circuit d'alimentation en gaz.

Ainsi, le brûleur équipant cette chaudière ne comporte aucun réglage.

En se reportant à présent aux figures 16 à 20 on pourra suivre la description de détail du corps de chauffe 1 de conception nouvelle et du circuit du fluide caloporteur.

La forme des éléments échangeurs utilisés est étudiée pour s'adapter aux particularités d'échange de chaleur et de circulation des fluides caloporteurs et de combustion dans ce type de chaudière.

Une caractéristique originale de ces échangeurs réside dans la conformation inclinée d'un des bords de la surface d'échange constituant une partie élémentaire du fond de la chambre de combustion, cette conformation ayant plusieurs fonctions comme il sera détaillé ci-après.

Une autre originalité concerne la prolongation de l'extrémité de l'échangeur au niveau de la chambre de combustion. Cette extrémité se rétrécit sur une certaine longueur pour former une extension constituant un passage pour le fluide caloporteur froid du circuit retour.

On notera le rôle essentiel de la forme originale de ces éléments échangeurs dans l'amélioration de la circulation de l'eau chauffée donc dans la possibilité d'obtenir plus de puissance avec un même élément.

Cette particularité fonctionnelle s'ajoute à l'intérêt économique de fabrication et à la maintenance réduite provenant de la réduction importante du dépôt de boues et de la formation de tartre.

Les éléments échangeurs dits intermédiaires référencés 2 comportent de façon connue un volume intérieur creux 85 dans lequel circule le fluide caloporteur, généralement de l'eau et deux faces latérales externes 86 et 87 présentant des picots émaillés tels que 88 ou ailettes d'échange de chaleur, répartis régulièrement sur une zone émaillée 89 occupant presque la totalité de la surface et qui seront en contact avec les gaz chauds provenant de la chambre de combustion.

La zone émaillée 89 pourvue de picots offre de ce fait une garantie suffisante de tenue à l'activité chimique corrosive des condensats.

On prévoit généralement classiquement deux passages d'eau cylindriques appelés connexions d'eau, l'une d'entrée d'eau froide 90 et l'autre de sortie d'eau chaude 91, d'axe horizontal perpendiculaire au plan de l'élément échangeur, pour l'arrivée de l'eau froide de retour et la sortie de l'eau chaude de départ.

Les éléments échangeurs d'extrémité arrière 11 et avant 10 (figures 19 et 20) comportent une seule face latérale interne telle que 92 pourvue de picots 88 semblables à ceux des faces latérales des éléments échangeurs intermédiaires 2. La face externe telle que 93 est lisse et pourvue généralement d'accessoires techniques.

Les éléments échangeurs d'extrémité possèdent encore des pieds gauches tels que 8, et droits tels que 9, et des trous d'assemblage tels que 94 pour le passage des tirants assemblant et maintenant juxtaposés entre eux tous les éléments échangeurs constitutifs du corps de chauffe 1 de la chaudière.

Le nombre total et les dimensions des éléments échangeurs intermédiaires 2 composant le corps de chauffe 1 sont fonction de la puissance souhaitée de la chaudière.

On se reportera à présent à la figure 16.

La forme générale de l'échangeur selon l'invention ne reprend pas une forme habituelle rectangulaire. Elle est dans son ensemble sensiblement trapézoïdale, s'évasant légèrement vers le haut et présentant un bord haut incliné ou rampe élémentaire 95, constituant une partie élémentaire du fond incliné 96 de la chambre de combustion 12 formée par la juxtaposition des éléments échangeurs intermédiaires.

Le bord latéral gauche 97 s'étend, légèrement incliné vers l'extérieur par rapport à la verticale, depuis le passage inférieur distributeur d'eau froide ou connexion inférieure 90 jusqu'à une rampe élémentaire inclinée constituée par le bord haut incliné 95 et se prolonge vers le haut par une extension latérale 98 sensiblement verticale, constituant une partie élémentaire 99 d'une des parois latérales 100 de la chambre de combustion 12.

Cette paroi latérale 100 sera qualifiée de sèche car ne renfermant pas d'eau.

Le bord latéral droit 101 s'étend, légèrement incliné vers l'extérieur par rapport à la verticale, depuis l'angle inférieur droit de l'élément jusqu'au passage collecteur d'eau chaude appelé connexion d'eau chaude 91.

La zone 89 des picots 88 occupe la partie centrale de chaque face externe d'élément échangeur. Elle présente à l'une de ses extrémités en-deçà de la connexion d'eau chaude 91 une extension longitudinale 102 formant un passage en canal 103 d'eau en mouvement vers ladite connexion. Ce canal 103 délimité par des cloisons adjacentes 104 et 105 en fonte de l'échangeur constitue une paroi latérale élémentaire 106 dite mouillée disposée en regard de la paroi latérale élémentaire sèche 100.

La juxtaposition des parois latérales élémentaires mouillées 106 formera une paroi latérale mouillée 107 de la chambre de combustion.

Comme déjà indiqué, l'échangeur présente le long d'un côté de la zone 89 de picots la rampe élémentaire inclinée 95 reliant les bases des deux parois latérales élémentaires 100 et 106.

La rampe élémentaire 95 est inclinée du bas vers le haut de la paroi élémentaire sèche 100 vers la paroi élémentaire mouillée 106 dans le sens de la montée de l'eau chaude.

Une inclinaison de l'ordre de 10° d'angle environ par rapport à l'horizontale s'avère suffisante.

Les deux parois latérales élémentaires sèche 100 et mouillée 106 forment, lorsque juxtaposées, les parois latérales 107 et 108 de la chambre de combustion 12. De même, les rampes élémentaires inclinées 95 constituent, lorsque juxtaposées, le fond incliné 96 de la chambre de combustion 12 qui sera obturée par la plaque-support 13 monobloc de brûleur.

A cet effet, on prévoit en haut de l'échangeur, (figures 16 et 20) deux éléments de bordure gauche 109 et droit 110 destinés à recevoir à fixation la plaque-support 13 de brûleur sur toute la longueur du corps de chauffe de la chaudière. L'élément de bordure droit 110 est placé plus haut que l'élément de bordure gauche 109 de façon que la pente de la plaque-support 13 de brûleur soit sensiblement la même que la pente du fond 96 de la chambre de combustion 12.

Le brûleur sera fixé sur la plaque-support 13 de brûleur et la flamme dirigée vers le bas et vers le fond 96 de la chambre de combustion 12 qui est, conformément à l'invention, incliné pour favoriser et accélérer le mouvement ascendant de l'eau chauffée vers le passage collecteur ou connexion de sortie d'eau chaude .

La combinaison d'une part de l'éloignement de la flamme du brûleur par rapport au fond de la chambre de combustion et d'autre part du caractère incliné de celui-ci permet d'éviter le risque de surchauffe et d'ébullition de l'eau déjà notablement chauffée lorsqu'elle atteint la zone située sous la chambre de combustion, risque qui se montre habituellement important dans le modèle de la chaudière selon l'invention.

## Revendications

1. Chaudière à gaz en fonte comportant notamment :
. un corps de chauffe (1) du type sectionnable, composé d'éléments (2) échangeurs juxtaposés, à volume intérieur creux dans lequel circule le fluide caloporteur du bas vers le haut, éléments échangeurs délimitant une chambre de combustion (12),
. un brûleur (14) du type à prémélange total gaz-air,
. un caisson isolant (3) formé de panneaux (4) entourant la chaudière,
caractérisée en ce que le bac (26) de récupération des condensats, intégré dans la chaudière, est fixé de façon étanche sous la totalité du corps de chauffe (1) et se prolonge, à l'arrière du corps de chauffe, par une boîte de raccordement (27) dont le fond comporte une sortie (28) pour les produits liquides et une sortie (30) pour les produits gazeux, raccordée par un conduit d'évacuation (32) à la cheminée,
en ce que le brûleur (14) est situé en partie haute du corps de chauffe et comprend :
. une chambre de prémélange (16) monobloc entièrement venue de fonderie, de forme générale en tronc de pyramide, fermée en partie supérieure et à ouverture inférieure constituant une sortie pour le mélange gazeux de combustion ;
. un bloc aéraulique (21) soufflant dont la sortie débouche dans la chambre de prémélange ;
. un conduit d'admission (22) d'air frais et un conduit d'évacuation des fumées (32) traversant le caisson isolant ;
. une plaque-support (13) de brûleur monobloc entièrement venue de fonderie, à trois niveaux fonctionnels couvrant la totalité de la partie supérieure de la chambre de combustion pour servir de support et d'interface entre la chambre de prémélange (16) et la chaudière ;
. un module de diffusion (68) de flamme de longueur voisine de celle de la plaque-support (13) sur la face avant duquel se forme la flamme, module solidarisé à la plaque-support (13) de brûleur en sous-face sur le côté opposé à celui recevant la chambre de prémélange (16) ;
. un joint plat intercalé entre chaque pièce détachable composant le brûleur et sa voisine,
et en ce que chacun des éléments échangeurs comporte un bord supérieur en rampe inclinée (95) formant par juxtaposition le fond (96) incliné de la chambre de combustion (12).

2. Chaudière selon la revendication précédente, caractérisée en ce qu'elle comporte en outre un conduit d'admission d'air (22) débouchant sur l'habillage, équipé d'un filtre (23) conformé en cône à pointe dirigée vers le bas.

3. Chaudière selon la revendication précédente, caractérisée en ce que la chambre de prémélange (16) comporte deux entrées latérales (35) et (36) disposées en regard, constituant les orifices d'entrée du gaz et de l'air, ladite chambre étant obturée sur sa face inférieure par un diaphragme (41) comportant un orifice (43) pour la sortie du mélange air-gaz.

4. Chaudière selon la revendication 3, caractérisée en ce que l'orifice de sortie (43) du mélange air-gaz sur le diaphragme (41) est décalé par rapport au plan de symétrie.

5. Chaudière selon les revendications précédentes, caractérisée en ce que les pièces constituantes du brûleur (14) sont en fonte moulée et en ce que l'étanchéité entre chacune d'entre elles est assurée par l'interposition d'un joint plat.

6. Chaudière selon les revendications précédentes, caractérisée en ce que le module de diffusion (68) présente une face bombée convexe (78) perméable au gaz sur laquelle se forme et se développe la flamme, face entourée d'un rebord périmétrique plan (80) de fixation sur la plaque-support de brûleur (13) avec interposition d'un joint plat d'étanchéité (81).

7. Chaudière selon l'une quelconque des revendications précédentes, caractérisée en ce que la plaque-support (13) de brûleur comporte successivement du haut vers le bas une chambre intermédiaire (63) de mélange recevant le mélange air-gaz sortant de la chambre de prémélange, une chambre de répartition (67) et un volume de combustion (72) délimité par le corps du module de diffusion (68) terminé vers l'extérieur par la face bombée convexe (78) constituant la surface de formation et de développement de la flamme.

8. Chaudière selon la revendication précédente, caractérisée en ce que la chambre intermédiaire (63) de mélange est fermée sur sa face supérieure par le diaphragme (41) et sur sa face inférieure par une plaque d'obturation (64) monobloc avec la plaque-support (13) de brûleur et dont les faces latérales longitudinales sont ouvertes sous la forme de fentes (65) et (66) pour former des chicanes par lesquelles le mélange air-gaz s'échappe vers la chambre de répartition (67).

9. Chaudière selon la revendication 8, caractérisée en ce que la partie couverte de la plaque-support (13) de brûleur constitue toute la partie supérieure du corps de chauffe de la chaudière.

10. Chaudière selon l'une quelconque des revendications 7 à 9, caractérisée en ce que la chambre de répartition (67) est fermée sur sa face supérieure par la plaque de fond (64) de la chambre intermédiaire (63) de mélange à chicanes et sur sa face inférieure par la partie convexe du module de diffusion (68).

11. Chaudière selon l'une des revendications précédentes, caractérisée en ce que le bloc aéraulique (21) comporte une sortie latérale présentant un injecteur (51) pénétrant complètement dans la chambre de prémélange.

12. Chaudière selon la revendication 11, caractérisée en ce que l'injecteur (51) affecte la forme d'une buse cylindro-conique (52).

13. Chaudière selon les revendications précédentes, caractérisée en ce que les échangeurs de chaleur destinés à conduire le fluide caloporteur entre une connexion d'entrée d'eau froide (90) en partie basse et une connexion de sortie d'eau chaude (91) en partie haute, présentent au moins sur une face externe une zone (89) formée d'une pluralité de structures saillantes vers l'extérieur du type picots (88), venues de fonderie, et favorisant l'échange de chaleur entre le fluide caloporteur et les produits de combustion à haute température circulant dans le volume compris entre les deux faces latérales à picots de deux éléments consécutifs juxtaposés, et comportent deux bords latéraux et deux bords transversaux d'extrémité inférieur et supérieur, et en ce que l'un des bords transversaux d'extrémité est une rampe inclinée (95), cette rampe se prolongeant approximativement à angle droit à l'une de ses extrémités par une extension renfermant un volume creux en canal (103) de passage de l'eau, formant une paroi élémentaire dite mouillée (106), constituée par la partie de l'échangeur située entre la limite de la zone à picots et la connexion adjacente (91).

14. Chaudière selon la revendication 13, caractérisée en ce que la forme générale de l'élément échangeur est trapézoïdale, s'évasant légèrement vers la rampe inclinée (95).

15. Chaudière selon la revendication 13, caractérisée en ce que la rampe inclinée (95) présente une pente montante de gauche à droite dans la position de brûleur haut.

16. Chaudière selon la revendication 13, caractérisée en ce que la rampe inclinée (95) présente une pente montante vers la connexion d'eau chaude qui est sensiblement de 10° d'angle par rapport à l'horizontale.

17. Chaudière selon l'une quelconque des revendications 13 à 16, caractérisée en ce que les bords latéraux se terminent par des extensions qui portent des éléments de bordures (109) et (110) à des niveaux différents pour recevoir une plaque amovible, support de brûleur obturant la chambre de combustion.

18. Chaudière selon l'une quelconque des revendications 13 à 17, caractérisée en ce que la connexion d'eau (91) reliée au volume creux de l'élément échangeur par la paroi élémentaire mouillée (106) constitue la sortie d'eau chauffée.

19. Chaudière selon l'une quelconque des revendications 1 à 18, caractérisée en ce qu'à l'intérieur du caisson isolant (3) formé de panneaux (4) est formé, par des panneaux supplémentaires, un volume intérieur étanche (7) accessible par une trappe supérieure renfermant le corps de chauffe et le brûleur de la chaudière.

20. Chaudière selon les revendications 1 à 19, caractérisée en ce que le conduit d'admission (22) de l'air frais débouche en partie basse du volume intérieur étanche (7) au niveau de la base du corps de chauffe (1).

## Patentansprüche

1. Gasbeheizter Kessel aus Gußeisen mit
- einem Gliederheizkörper (1) aus nebeneinander angeordneten Austauscherelementen (2) mit einem inneren Hohlraum, in dem die Wärmeträgerflüssigkeit von unten nach oben umläuft, wobei die Austauscherelemente eine Verbrennungskammer (12) begrenzen,
- einem Brenner (14) mit vollständiger Gas/Luft- Vormischung,
- einem von den Kessel umgebenden Platten (4) gebildeten Isolationsgehäuse (3),
dadurch gekennzeichnet, daß der in den Kessel integrierte Behälter (26) zur Kondensatrückgewinnung in einer den gesamten Heizkörper (1) unten abdichtenden Weise befestigt und an der Rückseite des Heizkörpers durch einen Anschlußkästen (27) verlängert ist, der am Boden einen Auslaß (28) für flüssige Produkte und einen Auslaß (30) für gasförmige Produkte aufweist, wobei letzterer mit einer Abzugsleitung (32) zum Kamin versehen ist,
daß der Brenner (14) sich im oberen Teil des Heizkörpers befindet und aufweist:
- eine im wesentlichen pyramidenstumpfförmige, einstückig aus Guß gefertigte Kammer (16) zum Vormischen, die im oberen Bereich geschlossen und mit einer unteren Öffnung versehen ist, die einen Auslaß für das Brenngasgemisch bildet;
- einen Gebläseblock (21), dessen Auslaß in die Kammer zum Vormischen mündet;
- eine Zuführleitung (22) für Frischluft und eine Rauch-Abzugsleitung (32), die das Isolationsgehäuse durchsetzen;
- eine vollständig aus Guß gefertigte, einstückige Brenner- Tragplatte (13) mit drei funktionellen Ebenen, die das gesamte obere Teil der Verbrennungskammer abdeckt und als Träger sowie als Grenzfläche zwischen der Kammer (16) zum Vormischen und dem Kessel dient;
- ein Flammendiffusionsmodul (68) mit einer Länge benachbart derjenigen der Tragplatte (13), auf dessen Vorderseite sich die Flamme ausbildet und das mit der Tragplatte (13) des Brenners unterseitig mit der Seite verbunden ist, die derjenigen, welche die Kammer (16) zum Vormischen aufnimmt, gegenüberliegt;
- eine Flachdichtung, die zwischen jedem der den Brenner bildenden lösbaren Teile und dessen Nachbarteilen eingesetzt ist,
und daß jedes Austauscherelement einen oberen Rand in Form einer geneigten Rampe (95) aufweist, die durch Nebeneinanderanordnung den geneigten Boden (96) der Verbrennungskammer (12) bilden.

2. Kessel nach dem vorangehenden Anspruch, gekennzeichnet durch eine an der Ummantelung mündende Luftzuführleitung (22), die mit einem sich kegelförmig mit der Spitze nach unten erstreckenden Filter (23) ausgestattet ist.

3. Kessel nach dem vorangehenden Anspruch, dadurch gekennzeichnet, daß die Kammer zum Vormischen (16) zwei seitliche einander gegenüberliegende Einlaßöffnungen für Gas und Luft aufweist, wobei die Kammer an ihrer Unterseite durch ein Diaphragma (41) verschlossen ist, welches eine Öffnung (43) für den Austritt des Luft-Gasgemisches aufweist.

4. Kessel nach Anspruch 3, dadurch gekennzeichnet, daß die Austrittsöffnung (43) für das Luft-Gasgemisch an dem Diaphragma (41) gegenüber der Symmetrieebene versetzt angeordnet ist.

5. Kessel nach einem der vorangehenden Ansprüche, dadurch gekennzeichnet, daß die den Brenner (14) bildenden Teile aus Gußeisen sind und daß die Abdichtung zwischen ihnen durch Einlegen einer Flachdichtung erfolgt.

6. Kessel nach einem der vorangehenden Ansprüche, dadurch gekennzeichnet, daß das Diffusionsmodul (68) eine gasdurchlässige konkav gewölbte Fläche (78) aufweist, auf der sich die Flamme bildet und entwickelt und die von einem ebenen perimetrischen Rand (80) zum Befestigen auf der Tragplatte des Brenners (13) unter Zwischenlage der Flachdichtung (81) umschlossen ist.

7. Kessel nach einem der vorangehenden Ansprüche, dadurch gekennzeichnet, daß die Tragplatte (13) des Brenners von oben nach unten nacheinander eine Zwischenmischkammer (63) zur Aufnahme des aus der Kammer zum Vormischen austretenden Luft-Gasgemisches, eine Verteilerkammer (67) und einen Verbrennungsraum (72) aufweist, der durch das Gehäuse des Diffusionsmoduls (68) begrenzt ist, das nach außen durch die konkav gewölbte Fläche (78), die die Oberfläche zur Erzeugung und Entwicklung der Flamme bildet, abgegrenzt ist.

8. Kessel nach dem vorangehenden Anspruch, dadurch gekennzeichnet, daß die Zwischenmischkammer (63) an ihrer Oberseite durch das Diaphragma (41) und an ihrer Unterseite durch eine einstückig mit der Tragplatte (13) des Brenners ausgebildete Verschlußplatte (34) verschlossen ist, deren Längsseitenwände unter Bildung von Schlitzen (65, 66) geöffnet sind, um Schikanen für das durch diese zur Verteilerkammer (67) strömende Luft-Gasgemisch auszubilden.

9. Kessel nach Anspruch 8, dadurch gekennzeichnet, daß der von der Brenner- Tragplatte (13) abgedeckte Bereich das ganze Oberteil des Heizkörpers des Kessels bildet.

10. Kessel nach einem der Ansprüche 7 bis 9, dadurch gekennzeichnet, daß die Verteilerkammer (37) an ihrer Oberseite durch die Bodenplatte (64) der Zwischenmischkammer (63) mit den Schikanen und an ihrer Unterseite durch den konvexen Abschnitt des Diffusionsmoduls (68) verschlossen ist.

11. Kessel nach einem der vorangehenden Ansprüche, dadurch gekennzeichnet, daß der Gebläseblock (21) mit einem seitlichen Auslaß versehen ist, der einen in die Kammer zum Vormischen vollständig eingreifenden Injektor (51) aufweist.

12. Kessel nach Anspruch 11, dadurch gekennzeichnet, daß der Injektor (51) die Form einer zylindrisch-konischen Düse (52) aufweist.

13. Kessel nach einem der vorangehenden Ansprüche, dadurch gekennzeichnet, daß die das Wärmeträgerfluid zwischen einem Kaltwassereinlaß (90) im Unterteil und einem Warmwasserauslaß (91) im Oberteil führenden Wärmeaustauscher wenigstens auf einer Außenseite eine Zone (89) aufweisen, die durch eine Vielzahl von nach außen ragenden, aus dem Guß geformten Strukturen in Form von spitzen Warzen (88) gebildet ist, und den Wärmeaustausch zwischen dem Wärmeträger und den Verbrennungsprodukten hoher Temperatur begünstigt, die im Raum zwischen zwei benachbarten, die Warzen aufweisenden Seitenflächen zweier nebeneinander angeordneter Elemente zirkulieren und jeweils zwei Längsränder und zwei Querränder am oberen und unteren Ende aufweisen, und daß einer der äußeren Querränder eine geneigte Rampe (95) ist, die sich an einem ihrer Enden unter einem etwa rechten Winkel in einer Erweiterung fortsetzt, die einen Hohlkanal (103) als Wasserdurchführung umschließt und eine Elementwand, die sogenannte Feuchtwand (106) bildet, die durch den zwischen der Grenze der Warzen und der angrenzenden Verbindung (91) liegenden Bereich des Austauschers gebildet ist.

14. Kessel nach Anspruch 13, dadurch gekennzeichnet, daß das Austauscherelement eine im wesentlichen trapezoidale Form aufweist, die sich in Richtung der geneigten Rampe (95) verbreitert.

15. Kessel nach Anspruch 13, dadurch gekennzeichnet, daß die geneigte Rampe (95) eine von links nach rechts in der Position des hochliegenden Brenners ansteigende Neigung aufweist.

16. Kessel nach Anspruch 13, dadurch gekennzeichnet, daß die geneigte Rampe (95) eine etwa 10° gegenüber der Horizontalen zum Warmwasseranschluß ansteigende Neigung aufweist.

17. Kessel nach einem der Ansprüche 13 bis 16, dadurch gekennzeichnet, daß die Seitenränder in Erweiterungen auslaufen, die in unterschiedlicher Höhe Randelemente (109, 110) zur Aufnahme einer lösbaren Platte als Träger für den die Verbrennungskammer abschließenden Brenner aufweist.

18. Kessel nach einem der Ansprüche 13 bis 17, dadurch gekennzeichnet, daß der mit dem Hohlvolumen des Austauscherelementes durch die Feuchtwand (106) verbundene Wasseranschluß (91) den Warmwasserauslaß bildet.

19. Kessel nach einem der Ansprüche 1 bis 18, dadurch gekennzeichnet, daß im Inneren der durch Platten (4) gebildeteten Isolationskammer (3) durch zusätzliche Platten ein durch eine obere Klappe zugängliches, dichtes Innenvolumen (7) gebildet ist, welche den Heizkörper und den Brenner des Kessels verschließt.

20. Kessel nach einem der Ansprüche 1 bis 19, dadurch gekennzeichnet, daß die Zuführleitung (22) für Frischluft im Unterteil des dichten Innenvolumens (7) in Höhe der Heizkörperbasis (1) mündet.

## Claims

1. Cast iron gas boiler comprising in particular:
· a heating body (1) of the sectional type, comprised of juxtaposed exchanger elements (2), with a hollow inner space in which the heat exchanging fluid circulates from the bottom upwards, the exchanger elements delimiting a combustion chamber (12);
· a burner (14) of the total gas air premixture type; and
· an insulating casing (3) formed of panels (4) surrounding the boiler;
characterised in that the vessel (26) for recovering the condensates, integrated in the boiler, is secured in a leaktight manner under the entire heating body (1) and is extended, at the rear of the heating body, by a connection box (27), the base of which comprises an outlet (28) for the liquid products and an outlet (30) for the gaseous products, connected by an evacuation duct (32) to the flue; and
in that the burner (14) is located in the upper part of the heating body and comprises:
· a completely cast monobloc premixing chamber (16) having the general shape of a truncated pyramid, closed at the top and with a lower aperture constituting an outlet for the gaseous combustion mixture;
· a blower block (21) for air, the outlet of which discharges into the premixing chamber;
· an inlet duct (22) for fresh air and an outlet duct for fumes (32) passing through the insulating tank;
· a completely cast monobloc support plate (13) for the burner, having three operating levels covering the entire upper part of the combustion chamber in order to act as a support and an interface between the premixing chamber (16) and the boiler;
· a module (68) for diffusing the flame, the length of which is similar to that of the support plate (13) and on the front face of which the flame is formed, the module being integral with the support plate (13) of the burner on the underside on the side opposite the side accommodating the premixing chamber (16);
· a flat seal filled between each detachable part making up the burner and its adjacent part;
and in that each of the exchanger elements comprises an upper edge forming an inclined slope (95), forming, by juxtaposition, the inclined base (96) of the combustion chamber (12).

2. Boiler according to the preceding claim, characterised in that it further comprises an air inlet duct (22), which discharges onto the covering and is provided with a filter (23) formed as a cone with the point directed downwards.

3. Boiler according to the preceding claim, characterised in that the premixing chamber (16) comprises two lateral inlets (35) and (36) disposed opposite one another, constituting inlet apertures for the gas and the air, said chamber being closed on its lower face by a membrane (41) comprising an aperture (43) for the outlet of the air/gas mixture.

4. Boiler according to Claim 3, characterised in that the outlet aperture (43) for the air/gas mixture in the membrane (41) is offset relative to the plane of symmetry.

5. Boiler according to the preceding claims, characterised in that the parts comprising the boiler (14) are made of cast iron; and in that the leaktightness between each of them is ensured by the interposition of a flat seal.

6. Boiler according to the preceding claims, characterised in that the diffusion module (68) has a gas-permeable convex curved surface (78), on which the flame forms and develops, the surface being surrounded by a flat perimeter edge (80) for securing on the burner support plate (13) with the interposition of a leaktight flat seal (81).

7. Boiler according to any one of the preceding claims, characterised in that the burner support plate (13) comprises successively from the top downwards, an intermediate mixing chamber (63) receiving the air/gas mixture leaving the premixing chamber, a distribution chamber (67) and a combustion space (72) delimited by the body of the diffusion module (68), terminated on the exterior by the curved convex surface (78) constituting the flame forming and developing surface.

8. Boiler according to the preceding claim, characterised in that the intermediate mixing chamber (63) is closed on its upper face by the membrane (41) and on its lower face by a closure plate (64) which is integral with the burner support plate (13), and of which the longitudinal lateral faces are open in the form of slots (65) and (66) to form baffles via which the air/gas mixture escapes towards the distribution chamber (67).

9. Boiler according to Claim 8, characterised in that the covered part of the burner support plate (13) comprises the entire upper part of the boiler heating body.

10. Boiler according to any one of Claims 7 to 9, characterised in that the distribution chamber (67) is closed on its upper face by the base plate (64) of the intermediate mixing chamber (63) with baffles, and on the lower surface by the convex part of the diffusion module (68).

11. Boiler according to any one of the preceding claims, characterised in that the air block (21) comprises a lateral outlet having an injector (51) completely penetrating the premixing chamber.

12. Boiler according to Claim 11, characterised in that the injector (51) assumes the form of a cylindro-conical nozzle (52).

13. Boiler according to the preceding claims, characterised in that the heat exchangers for conducting the heat-exchanging fluid between a cold water inlet connection (90) in the lower part and a hot water outlet connection (91) in the upper part have, on at least one external surface, an area (89) formed of a plurality of structures externally projecting, of the splinter type (88) and integrally cast, and assisting the exchange of heat between the heat-exchanging fluid and the high-temperature products of combustion circulating in the space between the two splinter-type lateral faces of two consecutive juxtaposed elements, and comprising two lateral edges and two transverse edges at the lower and upper ends; and in that one of the transverse end edges is an inclined slope (95), this slope extending approximately at a right angle at one of its ends by an extension enclosing a hollow space in the form of a duct (103) for the passage of water, forming an elementary wall, known as a dampened wall (106), constituted by the part of the exchanger located between the limit of the splintered zone and the adjacent connection (91).

14. Boiler according to Claim 13, characterised in that the general shape of the exchanger element is trapezoidal, widening slightly towards the inclined slope (95).

15. Boiler according to Claim 13, characterised in that the inclined slope (95) rises from the left to the right in the position of the upper burner.

16. Boiler according to Claim 13, characterised in that the inclined slope (95) has a slope rising towards the hot water connection which is at an angle of substantially 10° relative to the horizontal.

17. Boiler according to any one of Claims 13 to 16, characterised in that the lateral edges end in extensions which support edge elements (109) and (110) at different levels in order to accommodate a removable plate, the burner support closing the combustion chamber.

18. Boiler according to any one of Claims 13 to 17, characterised in that the water connection (91) connected to the hollow space of the exchanger element by the dampened elementary wall (106), constitutes the heated water outlet.

19. Boiler according to any one of preceding Claims 1 to 18, characterised in that, inside the insulating casing (3) formed of panels (4), there is formed by additional panels, a leaktight interior space (7) accessible via an upper flap, enclosing the heating body and the boiler burner.

20. Boiler according to Claims 1 to 19, characterised in that the fresh air inlet duct (22) discharges at the lower part of the leaktight internal space (7) at the base of the heating body (1).
